# EUROPÄISCHE PATENTSCHRIFT

(11) **EP 1 258 397 B1**
(45) Veröffentlichungstag und Bekanntmachung des Hinweises auf die Patenterteilung: **14.06.2006**
(21) Anmeldenummer: 02008476.0
(22) Anmeldetag: 15.04.2002
(51) Int. Cl.: B60R 7/02, B60R 7/12

(54) **Aufnahmevorrichtung für einen Laderaum eines Kraftfahrzeuges**
Holding appliance for vehicle luggage compartment
Dispositif de maintien pour le compartiment à bagages de véhicule

(30) Priorität: 18.05.2001 DE 10125726
(43) Veröffentlichungstag der Anmeldung: 20.11.2002
(73) Patentinhaber: BOS GmbH & Co. KG, 73760 Ostfildern (DE)
(72) Erfinder: Haspel, Klaus, 72108 Rottenburg (DE)
(74) Vertreter: Patentanwälte Ruff, Wilhelm, Beier, Dauster & Partner

(56) Entgegenhaltungen:
- DE-A- 3 923 690
- DE-A- 4 442 042
- DE-A- 10 038 807
- DE-A- 19 714 498
- DE-U- 8 804 416
- DE-U- 29 923 024
- US-A- 5 762 245

## Beschreibung

Die Erfindung betrifft eine Aufnahmevorrichtung für einen Laderaum eines Kraftfahrzeugs, wie z.B. aus DE-U-299 23024 bekannt ist.

Eine Aufnahmevorrichtung ist für einen Kofferraum eines Personenkraftwagens aus der Mercedes-S-Klasse bekannt. Dort ist ein Aufnahmenetz im Bereich des Heckspiegels des Kofferraums über die Breite der Ladeluke aufgespannt. Das Aufnahmenetz ist taschenartig gestaltet, wobei die oberen Ränder der Öffnung des taschenförmigen Aufnahmenetzes durch elastische Zugbänder gebildet sind, die je nach Bedarf zum Hineinsetzen oder Herausnehmen eines zu transportierenden Gegenstandes von hand aufgespreizt werden. Das Aufnahmenetz versperrt im aufgespannten Zustand einen großen Teil der heckseitigen Ladeluke. Um daher große, sperrige Gegenstände wie Koffer oder ähnliches in den Kofferraum hineinschieben zu können, muss zuvor das Aufnahmenetz entfernt werden.

Aufgabe der Erfindung ist es, eine Aufnahmevorrichtung der eingangs genannten Art zu schaffen, die eine Aufnahme und einen Transport von Gegenständen ermöglicht und dennoch so positioniert ist, dass die Beladung des Laderaumes mit sperrigen Gegenständen nicht behindert wird.

Diese Aufgabe wird durch die Merkmale des Anspruchs 1 gelöst.

Die Aufnahmestruktur ist in einem Kofferraum eines Personenkraftwagens im Bereich einer Unterseite einer oberen, im wesentlichen horizontalen Deckwandung angeordnet. Besonders vorteilhaft ist die Aufnahmestruktur somit im Bereich einer Unterseite einer den Kofferraum nach oben begrenzenden Hutablage positioniert. Diese Ausführungsform eignet sich insbesondere für zumindest weitgehend formstabile Aufnahmestrukturen. Falls flexible Aufnahmestrukturen in Form von Taschen oder Netzen vorgesehen sind, so müssen diese im Bereich ihrer Eck- oder Randabschnitte an der Unterseite der Hutablage befestigt sein, so dass die Aufnahmestruktur horizontal angeordnet ist und lediglich zu einer Seite, vorzugsweise nach hinten die Belade-und Entnahmeöffnung aufweist, die gemäß dem zuvor beschriebenen Stand der Technik durch mit Zugbändern versehene Ränder gebildet sein kann, wodurch die Öffnung im nicht benutzten Zustand aufgrund der Spannkraft der Zugbänder geschlossen ist. Durch die Anordnung im Bereich der oberen Deckwandung erfolgt keine Behinderung beim Beladen oder Entladen von sperrigen Gegenständen.

Die Aufnahmestruktur ist in Richtung zur Ruheposition durch eine Rückstellfederanordnung permanent beaufschlagt. Dadurch ist gewährleistet, dass die Aufnahmestruktur zwangsläufig in ihre raumsparende Ruheposition überführt wird, sofern sie nicht durch die Aufnahme eines Gegenstandes oder mehrerer Gegenstände belastet ist. Die Rückstellfederanordnung kann in unterschiedlicher Form gestaltet sein. Bei allen Ausführungsformen der Rückstellfederanordnung muss es wesentliches Merkmal sein, dass entsprechende Federmittel so ausgeführt sind, dass die Aufnahmestruktur in die zumindest weitgehend an die Wandung des Laderaumes angeschmiegte Ruheposition im unbelasteten Zustand überführt wird.

Die Aufnahmestruktur ist muldenartig gekrümmt gestaltet. Diese Ausgestaltung ist insbesondere bei einer formstabilen Aufnahmestruktur vorteilhaft. Die Muldenform gewährleistet selbst bereits eine ausreichende Aufnahmemulde. Um das zumindest weitgehende Anschmiegen an die Wandung des Laderaumes in einer Ruheposition zu erzielen, ist die Aufnahmestruktur vorzugsweise derart angeordnet, dass die Muldenform in etwa einer Stufe, Ecke oder Kante der Begrenzungsflächen des Laderaumes folgt - selbstverständlich auf die Ruheposition bezogen.

In weiterer Ausgestaltung der Erfindung ist die Aufnahmestruktur an einer Randseite um eine zu der Wandung parallele Scharnierachse schwenkbeweglich gelagert. Dadurch ist es möglich, die Aufnahmestruktur lediglich an einer Seite anzuschlagen, so dass die Anzahl von Verbindungs- oder Befestigungsstellen mit der entsprechenden Wandung des Laderaumes auf ein Minimum reduziert ist.

In weiterer Ausgestaltung der Erfindung ist die Rückstellfederanordnung im Bereich der Scharnieranordnung positioniert. Vorzugsweise ist die Rückstellfederanordnung durch eine Schrauben- oder Schenkelfeder gestaltet, deren Federwindungen koaxial zur Scharnierachse der Scharnieranordnung ausgerichtet sind. Dadurch ist eine äußerst platzsparende Unterbringung der Rückstellfederanordnungen gewährleistet.

In weiterer Ausgestaltung der Erfindung ist die Aufnahmestruktur als Bügelteil, insbesondere aus einem Metalldraht, gestaltet. Dadurch kann die Aufnahmestruktur durch ein Drahtbiegeteil besonders kostengünstig hergestellt werden.

In weiterer Ausgestaltung der Erfindung ist die Aufnahmestruktur im Bereich der Scharnierachse mittels einer Lagereinheit fahrzeugfest gehalten. Diese Lagereinheit kann aus Kunststoff oder aus Metall oder aus einer Kombination von Kunststoff- und Metallbauteilen gestaltet sein. Bei einer Gestaltung aus Kunststoff kann die Lagereinheit einstückig mit der Aufnahmestruktur hergestellt sein, falls die Aufnahmestruktur ebenfalls aus Kunststoff besteht. Als geeignete Scharnieranordnung ist für diese Ausführungsform ein Filmscharnier vorgesehen. Vorzugsweise ist die Aufnahmestruktur lösbar mit der Lagereinheit verbunden, um ein Austauschen der Aufnahmestruktur zu ermöglichen, falls Beschädigungen an der Aufnahmestruktur aufgetreten sind. Bei einer bevorzugten Ausgestaltung kann auch die Lagereinheit lösbar an der Wandung des Laderaumes befestigt sein, um die Lagereinheit einschließlich der Aufnahmestruktur entfernen zu können, falls diese auf Dauer im Laderaum nicht mehr benötigt wird.

Weitere Vorteile und Merkmale der Erfindung ergeben sich aus den Ansprüchen wie aus der nachfolgenden Beschreibung eines bevorzugten Ausführungsbeispiels der Erfindung, das anhand der Zeichnungen dargestellt ist.
- Fig. 1: zeigt schematisch in einem Längsschnitt einen Heckbereich eines Personenkraftwagens, der mit einer Ausführungsform einer erfindungsgemäßen Aufnahmevorrichtung versehen ist,
- Fig. 2: in vergrößerter Darstellung die Aufnahmevorrichtung aus Fig. 1 in einer ersten Position,
- Fig. 3: die Aufnahmevorrichtung nach Fig. 2 in einer Aufnahmeposition,
- Fig. 4: perspektivisch die Aufnahmevorrichtung nach den Fig. 1 bis 3 bei geöffneter Darstellung des Kofferraumes des Personenkraftwagens und
- Fig. 5: in vergrößerter, perspektivischer Darstellung die Aufnahmevorrichtung im unmontierten Zustand .

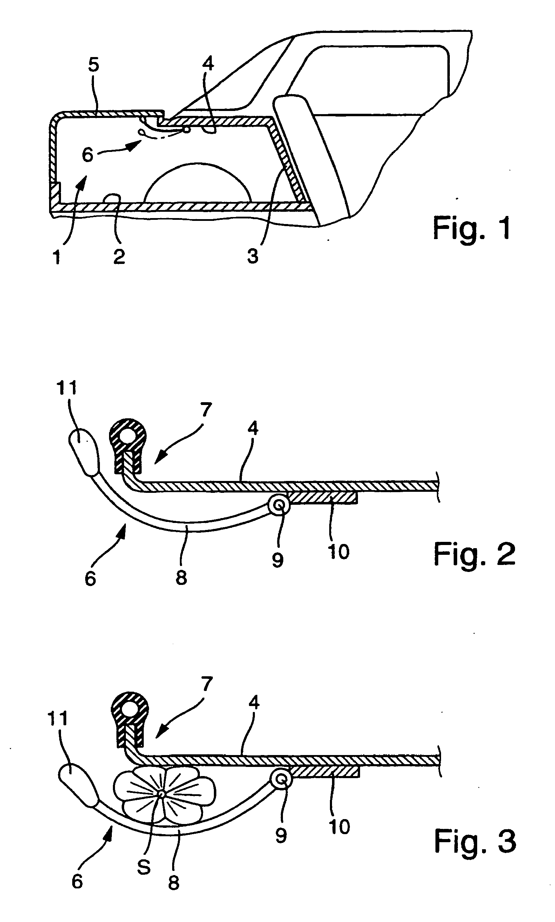

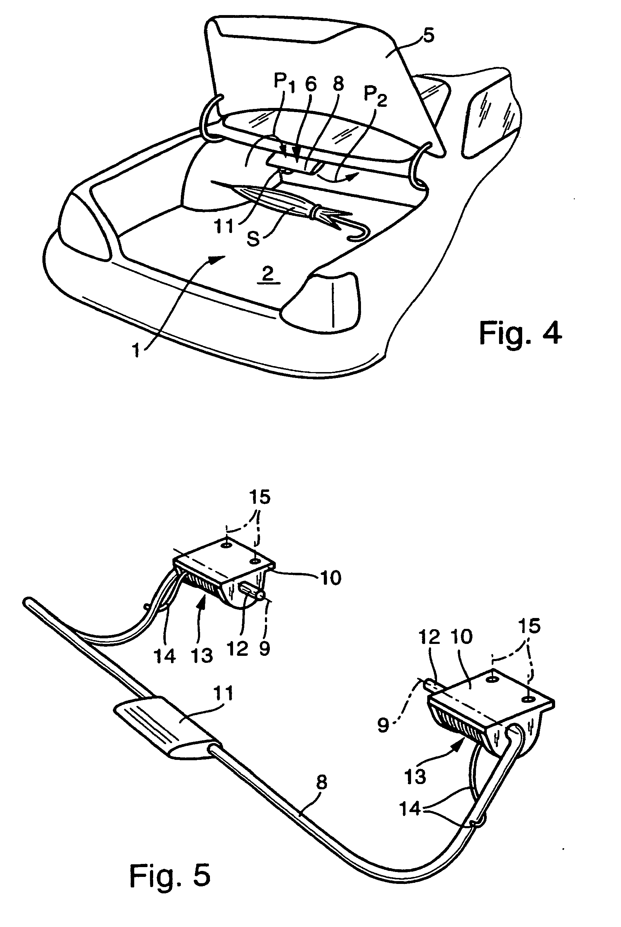

Ein Kraftfahrzeug in Form eines Personenkraftwagens weist gemäß Fig. 1 und 4 einen Laderaum in Form eines Kofferraumes 1 auf. Der Personenkraftwagen ist als Stufenhecklimousine ausgeführt und mit einem eine Beladeöffnung des Kofferraumes 1 verschließenden Heckdeckel 5 versehen.

Der Kofferraum 1 ist mit einem Kofferraumboden 2, in Fahrtrichtung nach vorne mit einer Frontwand 3 und nach oben mit einer Deckwandung 4 versehen, die die Unterseite einer Hutablage bildet. In Fahrtrichtung nach hinten wird der Kofferraum 1 durch einen nicht näher bezeichneten Heckspiegel sowie durch einen nach unten gezogenen Abschnitt des Kofferraumdeckels 5 begrenzt. Die obere, im wesentlichen horizontale Begrenzungsfläche für den Kofferraum 1 wird somit zum einen durch die Deckwandung 4 und zum anderen durch einen horizontalen Abschnitt des Heckdeckels 5 gebildet. Im Bereich des Randes der Beladeöffnung endet die Deckwandung 4 durch einen nach oben gezogenen Randflansch 7 (Fig. 2 und 3), der mit einer elastischen Dichtung für den Kofferraumdeckel abschließt. Der Randflansch 7 bildet eine Stufe der oberen, horizontalen Begrenzungsfläche des Kofferraumes 1, da der horizontale Abschnitt des Kofferraumdeckels 5 in Fahrzeughochrichtung relativ zur Ebene der Deckwandung 4 nach oben versetzt ist.

An der Unterseite der Deckwandung 4 ist eine mit einer Aufnahmestruktur 8 versehene Aufnahmevorrichtung 6 angeordnet, die für die Aufnahme kleinerer Gegenstände vorgesehen ist und insbesondere als Halter für einen Regen- oder Sonnenschirm S dient. Die Aufnahmestruktur 8 ist beim dargestellten Ausführungsbeispiel - wie anhand der Fig. 4 und 5 erkennbar ist - als einstückiges Bügelteil gestaltet, wobei das Bügelteil zwei seitliche, gleichförmig und gleichsinnig gekrümmte Bügelschenkel sowie einen einstückig die Bügelschenkel miteinander verbindenden Quersteg aufweist, an dem ein Griffelement 11 angeordnet ist. Durch die Krümmung der beiden Bügelschenkel wird eine muldenartig gekrümmte Aufnahmefläche für die Aufnahmestruktur 8 erzielt, in die der Schirm S eingebettet werden kann.

An ihren dem Quersteg gegenüberliegenden Enden gehen die Bügelschenkel in rechtwinklig abgewinkelte Scharnierwellenteile 12 einstückig über, die jeweils an einem Lagerbock 10 einer Lagereinheit für die Auf nahmestruktur 8 drehbar gelagert sind. Die beiden Scharnierwellenteile 12 sind gemäß Fig. 5 nach innen aufeinander zugerichtet und fluchten längs einer gemeinsamen Scharnierachse 9 der Lagereinheit und damit der Lagerböcke 10 miteinander. Die beiden Lagerböcke 10 der Lagereinheit sind über Befestigungsmittel 15 mit der Deckwandung 4 fest verbunden. Als Befestigungsmittel können lösbare Verbindungen, wie Verschraubungen, Verklipsungen, aber auch unlösbare Verbindungen, wie Vernietungen, Verschweißungen, Verlötungen oder ähnliches vorgesehen sein.

Die Aufnahmestruktur ist beim dargestellten Ausführungsbeispiel aus einem Metalldraht gebogen, der eine relativ große Steifigkeit aufweist, so dass die Aufnahmestruktur 8 zumindest weitgehend formstabil ist.

Wie anhand der Fig. 2 erkennbar ist, ist die Krümmung der Aufnahmestruktur 8 so gewählt und die Lagereinheit, d.h. die Lagerböcke 10, derart in Abstand zum Randflansch 7 an der Unterseite der Deckwandung 4 positioniert, dass die Aufnahmestruktur 8 mit ihrem Quersteg und dem Griffelement 11 in den nach oben abgestuften Bereich unterhalb des horizontalen Abschnittes des Kofferraumdeckels 5 hineinragt. Dadurch ist die Aufnahmestruktur in einer Ruheposition, in der sie an der Kante im Bereich des Randflansches 7 anliegt, zumindest weitgehend an die Deckwandung 4 und die entsprechende Abstufung im Bereich des Randflansches 7 angeschmiegt, so dass in dieser Position an der Deckwandung 4 nahezu kein störender Aufbau nach unten vorhanden ist. Der freie Querschnitt des Laderaumes wird somit in der Ruheposition der Aufnahmestruktur durch die Aufnahmevorrichtung nahezu nicht beeinträchtigt.

Um zu gewährleisten, dass die Aufnahmestruktur in der Ruheposition, in der sie an der Deckwandung 4 angeschmiegt ist, verbleibt, so lange sie nicht durch die Aufnahme eines Gegenstandes belastet ist, ist eine Rückstellfederanordnung 13, 14 vorgesehen, die auf die Aufnahmestruktur 8 eine Rückstellfunktion zur Ruheposition hin ausübt. Beim dargestellten Ausführungsbeispiel ist die Rückstellfederanordnung durch zwei Schenkelfedern 13, 14 gebildet, die in jeweils einem Lagerbock 10 integriert sind. Jede Schenkelfeder 13, 14 weist eine definierte Anzahl von Schraubwindungen 13 auf, die koaxial zur Scharnierachse 9 um den jeweiligen Scharnierwellenteil 12 herum innerhalb des Lagerbockes 10 gewunden sind. Ein nicht dargestellter, fahrzeugfest abgestützter Stützschenkel liegt innerhalb des Lagerbockes 10 an. Ein gegenüberliegender Wirkschenkel 14 ragt zum jeweiligen Bügelschenkel hin ab und umgreift diesen formschlüssig, um die entsprechende Rückstellkraft auf die Bügelschenkel und damit auf die Aufnahmestruktur 8 zu übertragen. Die Rückstellkraft der Rückstellfederanordnung 13, 14 ist derart gewählt, dass ein länglicher Gegenstand vom Gewicht eines Schirmes S sicher aufgenommen und gegen die Unterseite der Deckwandung 4 auch im normalen Fahrbetrieb, d.h. bei Schüttel-, Brems- und Beschleunigungsbelastungen, gehalten wird. Die Rückstellkraft ist so begrenzt, dass dennoch von Hand ein Öffnen, d.h. ein Nachuntendrücken des Griffelementes 11 und der Aufnahmestruktur 8 (Pfeilrichtung P₂) erfolgen kann, ohne dass hierzu übergroße Kräfte benötigt werden.

Um nun einen Schirm S oder einen anderen Gegenstand in die Aufnahmestruktur 8 einzulegen, wird die Aufnahmestruktur mittels des Griffelementes 11 in Pfeilrichtung P₂ nach unten gedrückt. Anschließend wird der Schirm S oder der andere Gegenstand in die gebildete Aufnahmemulde in Pfeilrichtung P₁ eingelegt. Anschließend wird das Griffelement 11 losgelassen, wodurch die Rückstellkraft der Rückstellfederanordnung 13, 14 den Schirm S bzw. den anderen Gegenstand nach oben gegen die Deckwandung 4 drückt und in dieser Position sichert.

## Patentansprüche

1. Kofferraum eines Personenkraftwagens mit einer Aufnahmevorrichtung, die eine Aufnahmestruktur (8) aufweist, die an einer oberen, im wesentlichen horizontalen Deckwandung (4) des Laderaumes (1) zwischen einer Ruheposition und wenigstens einer Aufnahmeposition beweglich gelagert ist, wobei die Aufnahmestruktur (8) in der Ruheposition an die Deckwandung (4) des Laderaumes (1) angeschmiegt ist, wobei die Aufnahmestruktur (8) im Bereich einer Unterseite der Deckwandung (4) angeordnet ist, **dadurch gekennzeichnet, dass** die Aufnahmestruktur (8) in Richtung zur Ruheposition durch eine Rückstellfederanordnung (13, 14) permanent beaufschlagt ist, und dass die Aufnahmestruktur (8) eine muldenartig gekrümmte Aufnahmefläche für die Einbettung länglicher Gegenstände aufweist.

2. Kofferraum nach Anspruch 1, **dadurch gekennzeichnet, dass** die Aufnahmestruktur (8) formstabil gestaltet ist.

3. Kofferraum nach Anspruch 1, **dadurch gekennzeichnet, dass** die Aufnahmestruktur (8) an einer Randseite um eine zu der Wandung (4) parallele Scharnierachse (9) schwenkbeweglich gelagert ist.

4. Kofferraum nach Anspruch 1, **dadurch gekennzeichnet, dass** die Rückstellfederanordnung (13, 14) im Bereich der Scharnierachse (9) positioniert ist.

5. Kofferraum nach Anspruch 1 oder 2, **dadurch gekennzeichnet, dass** die Aufnahmestruktur (8) als Bügelteil, insbesondere aus einem Metalldraht, gestaltet ist

6. Kofferraum nach Anspruch 3, **dadurch gekennzeichnet, dass** im Bereich der Scharnierachse (9) für die Aufnahmestruktur (8) eine fahrzeugfest angeordnete Lagereinheit (10) vorgesehen ist.

7. Kofferraum nach Anspruch 6, **dadurch gekennzeichnet, dass** die Lagereinheit aus Kunststoff hergestellt ist.

8. Kofferraum nach Anspruch 6, **dadurch gekennzeichnet, dass** die Aufnahmestruktur (8) lösbar mit der Lagereinheit (10) verbunden ist.

9. Kofferraum nach Anspruch 6, **dadurch gekennzeichnet, dass** die Lagereinheit (10) lösbar an der Wandung (4) des Laderaumes (1) befestigt ist.

## Claims

1. A luggage compartment of a passenger vehicle, having a carrying device comprising a carrying structure (8) that is mounted on an upper, substantially horizontal, top wall (4) of the loading space (1) so as to be movable between a rest position and at least one carrying position, wherein the carrying structure (8), when in the rest position, fits closely against the top wall (4) of the loading space (1), wherein the carrying structure (8) is arranged in the region of an underside of the top wall (4), **characterised in that** the carrying structure (8) is acted upon continuously by a restoring spring arrangement (13, 14) in the direction towards the rest position, and **in that** the carrying structure (8) has a receiving surface curved in the form of a trough for emplacement of elongate articles.

2. A luggage compartment according to claim 1, **characterised in that** the carrying structure (8) is of dimensionally stable construction.

3. A luggage compartment according to claim 1, **characterised in that** the carrying structure (8) is mounted at one edge so as to pivot around a hinge axis (9) parallel to the wall (4).

4. A luggage compartment according to claim 1, **characterised in that** the restoring spring arrangement (13, 14) is positioned in the area of the hinge axis (9).

5. A luggage compartment according to claim 1 or 2, **characterised in that** the carrying structure (8) is in the form of a hoop-shaped member, especially made of a metal wire.

6. A luggage compartment according to claim 3, **characterised in that**, in the area of the hinge axis (9), a bearing unit (10) fixedly arranged on the vehicle is provided for the carrying structure (8).

7. A luggage compartment according to claim 6, **characterised in that** the bearing unit is manufactured from plastics material.

8. A luggage compartment according to claim 6, **characterised in that** the carrying structure (8) is releasably connected to the bearing unit (10).

9. A luggage compartment according to claim 6, **characterised in that** the bearing unit (10) is releasably fixed to the wall (4) of the loading space (1).

## Revendications

1. Coffre à bagages d'un véhicule de tourisme comprenant un dispositif de retenue qui présente une structure de retenue (8) qui est placée sur une paroi de recouvrement supérieure (4) - pratiquement horizontale - de l'espace de chargement (1) et mobile entre une position de repos et au moins une position de retenue, où la structure de retenue (8), dans la position de repos, est appliquée contre la paroi de recouvrement (4) de l'espace de chargement (1), où la structure de retenue (8) est disposée dans la zone du dessous de la paroi de recouvrement (4),
**caractérisé**
**en ce que** la structure de retenue (8) est sollicitée de façon permanente, en direction de la position de repos, par un dispositif à ressorts de rappel (13, 14), et
**en ce que** la structure de retenue (8) présente une surface de retenue recourbée en forme d'auge, pour le logement d'objets allongés.

2. Coffre à bagages selon la revendication 1, **caractérisé en ce que** la structure de retenue (8) est configurée en étant stable dans sa forme.

3. Coffre à bagages selon la revendication 1, **caractérisé en ce que** la structure de retenue (8) est montée, sur un bord d'extrémité, en étant mobile de façon pivotante autour d'un axe de charnière (9) parallèle à la paroi (4).

4. Coffre à bagages selon la revendication 1, **caractérisé en ce que** le dispositif à ressorts de rappel (13, 14) est positionné dans la zone de l'axe de charnière (9).

5. Coffre à bagages selon la revendication 1 ou 2, **caractérisé en ce que** la structure de retenue (8) est configurée comme une pièce en forme d'étrier, en particulier réalisée à partir d'un fil métallique.

6. Coffre à bagages selon la revendication 3, **caractérisé en ce qu'**il est prévu, pour la structure de retenue (8), dans la zone de l'axe de charnière (9), un ensemble formant support de fixation (10) disposé en étant solidaire du véhicule.

7. Coffre à bagages selon la revendication 6, **caractérisé en ce que** l'ensemble formant support de fixation est fabriqué en matière plastique.

8. Coffre à bagages selon la revendication 6, **caractérisé en ce que** la structure de retenue (8) est reliée, de manière démontable, à l'ensemble formant support de fixation (10).

9. Coffre à bagages selon la revendication 6, **caractérisé en ce que** l'ensemble formant support de fixation (10) est fixé, de manière démontable, sur la paroi (4) de l'espace de chargement (1).
